# FASCICULE DE BREVET EUROPEEN

(11) **EP 0 755 294 B1**
(45) Date de publication et mention de la délivrance du brevet: **05.12.2001**
(21) Numéro de dépôt: 95917398.0
(22) Date de dépôt: 13.04.1995
(51) Int. Cl.: B01D 45/02, B01D 45/08

(54) **PROCEDE ET DISPOSITIF D'ELIMINATION DE PARTICULES CONTENUES DANS UN COURANT DE FLUIDE**
VERFAHREN UND VORRICHTUNG ZUR ABTRENNUNG VON TEILCHEN AUS EINEM FLUIDSTROM
METHOD AND DEVICE FOR REMOVING PARTICLES FROM A FLUID STREAM

(30) Priorité: 14.04.1994 GB 9407441; 20.03.1995 US 406393
(43) Date de publication de la demande: 29.01.1997
(60) Demande divisionnaire: 01111746.2
(73) Titulaire: INSTITUT FRANCAIS DU PETROLE, 92500 Rueil Malmaison (FR); Dullien, Francis.,L., Kitchener, Ontario N2N 1Z4 (CA)
(72) Inventeur: DULLIEN, Francis, A., L., Kitchener, Ontario N2N 1Z4 (CA); VILTARD, Jean-Charles, F-26000 Valence (FR)
(86) Numéro de dépôt international: FR9500489
(87) Numéro de publication internationale: WO9528217

(56) Documents cités:
- EP-A- 0 379 032
- WO-A-93/15822
- DE-A- 3 731 766
- FR-A- 518 533
- GB-A- 237 326
- GB-A- 878 037

## Description

La présente invention concerne l'élimination de fines particules contenues dans des fluides. La présente invention facilite en particulier la séparation et la récupération de particules telles que poussières, brouillard, vapeurs, fumée, ainsi que des gaz nocifs, etc, dispersés dans un gaz présentant un régime d'écoulement turbulent, en profitant de certains effets liés à la turbulence de manière spécifique et nouvelle et en utilisant des moyens purement mécaniques.

Il est connu des spécialistes de la mécanique des fluides et des domaines qui y sont liés que les fines particules dispersées dans un fluide présentant un écoulement turbulent ont tendance à suivre les tourbillons du fluide turbulent.

La séparation de très fines particules présentant une taille comprise entre 0,01 et 100 microns et contenues dans des gaz industriels ou dans l'air ambiant représente une opération complexe et coûteuse. Les dispositifs habituellement utilisés à cet effet comprennent des dépoussiéreurs électriques, différents filtres et des dépoussiéreurs humides. On utilise également des laveurs pour éliminer les gaz nocifs contenus dans les gaz industriels. Des collecteurs à cyclone sont employés de manière traditionnelle pour éliminer les particules présentant une taille supérieure à environ 5 microns, et des efforts concertés ont été récemment mis en oeuvre afin d'étendre leur efficacité à des particules d'une taille d'environ 1 micron.

La demande de brevet international publiée sous le n° WO93/15.822 décrit une méthode permettant d'éliminer de fines particules dispersées dans un courant de fluide en utilisant l'effet de mélange de la turbulence pour séparer et récupérer les fines particules d'une manière spécifique et nouvelle, en faisant passer le courant de fluide présentant un écoulement turbulent à travers un canal présentant un volume intérieur libre, le long duquel est aménagée une zone communiquant librement avec le canal d'écoulement, dans laquelle l'écoulement est entravé par un grand nombre d'objets sous forme de plaques proches les unes des autres au sein de la veine d'écoulement, qui provoquent la transformation de l'écoulement turbulent en un écoulement visqueux. Des remous turbulents transportant les particules pénètrent continuellement dans cette zone, qui forme une couche sous-jacente visqueuse dilatée, et déposent les particules à la surface des objets présents dans cette zone. La rétention des particules à la surface des objets est améliorée si ces objets sont chargés d'électricité statique. On appellera "dépoussiéreurs d'écoulement turbulent" les dispositifs fonctionnant selon le principe décrit ci-dessus de récupération des particules contenues dans des courants de fluide.

La présente invention divulgue des moyens destinés à effectuer une telle séparation des particules qui ne sont pas décrits dans le document WO93/15.822. Un dispositif selon l'invention est défini dans la revendication 1. Une méthode selon l'invention est définie dans la revendication 8. Des modes particuliers de réalisation sont définis dans les revendications dépendantes. Le mécanisme de récupération des poussières est le même que dans le document WO 93/15822 à savoir un dépôt turbulent par pénétration de tourbillons mais l'efficacité est angmentée. Certains moyens de récupération ou d'élimination des poussières recueillies sont décrits ici, mais ils ne constituent en aucune façon la seule méthode d'élimination des poussières recueillies. Certains se basent sur des moyens purement physiques (utilisant la gravité) et d'autres peuvent reposer sur des moyens mécaniques (tels que base à claire-voie, transporteur à vis, bande transporteuse, mécanisme à secousses, agitation à retour rapide, etc.). Certains modes de réalisation sont utiles pour des applications à petite échelle (jusqu'à 500 acfm), certains sont destinés à des applications de taille moyenne (jusqu'à 5000 acfm) et d'autres peuvent être modifiés en vue d'être appliqués à des unités industrielles de grande échelle. Le mode de réalisation décrit peut être utilisé, en plus de l'élimination de particules, pour éliminer des gaz nocifs soit par l'imprégnation de la surface collectrice avec un catalyseur adapté ou un adsorbant tel que du charbon actif, soit par une fine pulvérisation d'eau ou d'une solution aqueuse adaptée que l'on injecte dans le courant de gaz turbulent avant le dispositif collecteur. Dans le premier cas, les tourbillons transportent continuellement le gaz nocif jusqu'à la surface collectrice où il réagit ou est adsorbé. Dans le second cas, le jet fin pulvérisé est précipité par dépôt turbulent après avoir absorbé le gaz nocif. Dans ce cas, le dépoussiéreur d'écoulement turbulent fonctionne comme un dépoussiéreur humide.

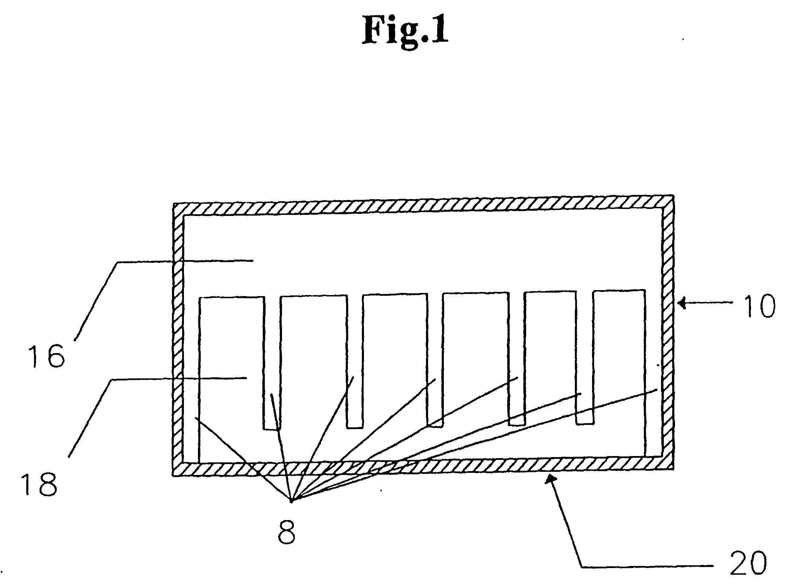

La figure unique est une vue de face d'une plaque selon l'invention disposée dans un logement.

Il est possible de placer un nombre relativement élevé de plaques 18 les unes derrière les autres transversalement dans le logement 10, soit en les posant sur le fond du logement, comme il est décrit dans le document WO93/15.822, soit en laissant un espace entre le fond 20 du logement 10 et les bords inférieurs des plaques 18. Le gaz s'écoule dans le canal 16 sous la forme d'un écoulement turbulent. Certaines ou toutes les plaques comportent une pluralité de fentes 8 alignées les unes derrière les autres, formant des espaces, que l'on peut désigner par le terme de "canyons", et qui traversent l'ensemble des plaques 18. La largeur de chacune de ces fentes ou canyons est variable mais elle est de préférence comprise entre environ 3 mm et 10 mm. Les espaces entre les fentes ou canyons pratiqués dans les plaques sont également variables, mais ils sont compris de préférence entre environ 1 cm et environ 30 cm. Lors d'essais réalisés sur des poussières d'essai ASP 200 dispersées avec un diamètre moyen des particules de 1,8 µm, un logement 10 d'une largeur de 61 cm, un canal 16 d'écoulement du gaz d'une hauteur de 5 cm, un espacement des plaques de 4 cm, une hauteur de plaques de 15 cm, une vitesse du gaz comprise entre 12 ms⁻¹ et 18 ms⁻¹, un dépoussiéreur d'une longueur de 3,4 m, le rendement de récupération avec des plaques exemptes de "canyons" s'élevait à 48 %, tandis qu'avec des plaques munies de 13 "canyons" de 3 mm de largeur, le rendement passait à 62 %.

### Dimensions

La largeur du logement 10 est comprise entre 10 cm et 1 m et s'élève de préférence à environ 50 cm, la hauteur du canal d'écoulement 16 est comprise entre 1 cm et 20 cm et s'élève de préférence à environ 5 cm. La longueur du logement dépend de la tâche à accomplir et du rendement de récupération recherché. La vitesse du gaz dans le canal d'écoulement 16 est comprise entre 1 ms⁻¹ et 30 ms⁻¹ et s'élève de préférence à environ 15 ms⁻¹.

En résumé, la présente invention apporte une nouvelle structure et une méthode de mise en oeuvre permettant d'éliminer de manière efficace des particules, généralement de très petite taille, en suspension dans des gaz industriels ou dans l'air.

## Revendications

1. Dispositif permettant d'éliminer des particules contenues dans un courant de fluide, comprenant un logement (10) ayant un passage (16) pour le courant de fluide en écoulement turbulent, et une pluralité d'objets orientés transversalement par rapport au sens de l'écoulement, sous forme de plaques (18) disposées à proximité les unes des autres, lesdits objets ayant des bords communiquant avec le courant de fluide et définissant entre eux au moins un espace stagnant où les particules sont récupérées, **caractérisé en ce que** les objets sont des plaques munies de fentes qui s'étendent à l'intérieur depuis lesdits bords

2. Dispositif selon la revendication 1, **caractérisé en ce que** lesdites plaques sont chargées d'électricité statique.

3. Dispositif selon la revendication 1, dans lequel ledit passage (16) est incliné afin de faciliter l'élimination des particules recueillies dans lesdits espaces par gravité.

4. Dispositif selon la revendication 1, comportant des moyens destinés à secouer et/ou à déplacer les surfaces sur lesquelles sont recueillies les particules afin d'en faciliter l'élimination.

5. Dispositif selon la revendication 1, **caractérisé en ce que** ledit passage est tubulaire.

6. Méthode permettant d'éliminer des particules contenues dans un courant de fluide **caractérisée en ce que** :
- on fait passer ledit courant de fluide dans un passage de tel façon que l'écoulement soit turbulent,
- on dispose d'une pluralité de plaques orientées transversalement par rapport au sens de l'écoulement, lesdites plaques étant au moins en partie das plaques munies de fentes qui s'étendent à l'intérieur depuis les bords des plaques;
- on espace lesdites plaques de tel façon que l'écoulement entre les plaques soit visqueux,
- on récupère les particules dans les espaces entre les plaques.

## Patentansprüche

1. Vorrichtung, die es ermöglicht, in einem Fluidstrom enthaltene Partikel zu eliminieren, umfassend: eine Lagerung (10) mit einem Durchlass (16) für den in turbulenter Strömung befindlichen Fluidstrom und mit einer Vielzahl von quer bezüglich der Strömungsrichtung orientierten Gegenständen in Form von einander benachbart angeordneten Platten (18), wobei diese Gegenstände über Ränder verfügen, die mit dem Fluidstrom in Verbindung stehen und zwischen sich wenigstens einen Ruheraum definieren, wo die Partikel rückgewonnen werden, **dadurch gekennzeichnet, dass** die Gegenstände mit Schlitzen versehene Platten sind, die sich nach innen von diesen Rändern aus erstrecken.

2. Vorrichtung nach Anspruch 1, **dadurch gekennzeichnet, dass** diese Platten elektrostatisch aufgeladen sind.

3. Vorrichtung nach Anspruch 1, bei der dieser Durchlass (16) geneigt ist, um die Eliminierung der in diesen Räumen gesammelten Partikel durch Schwerkraft zu erleichtern.

4. Vorrichtung nach Anspruch 1, Mittel umfassend, die dazu bestimmt sind zu schütteln und/oder die Flächen zu verschieben, auf denen sich die Partikel gesammelt haben, und zwar zu dem Zweck, sie leichter zu eliminieren.

5. Vorrichtung nach Anspruch 1, **dadurch gekennzeichnet, dass** dieser Durchlass röhrenförmig ist.

6. Verfahren, das es ermöglicht, Partikel zu eliminieren, die in einem Fluidstrom enthalten sind, **dadurch gekennzeichnet, dass**
- man diesen Fluidstrom in einen Durchlass derart führt, dass die Strömung turbulent wird,
- man eine Vielzahl von quer bezüglich der Strömungsrichtung orientierten Platten anordnet, wobei diese Platten wenigstens zum Teil mit Schlitzen versehene Platten sind, die sich nach innen ausgehend von den Plattenrändern aus erstrecken,
- man diese Platten so unter Abstand anordnet, dass die Strömung zwischen den Platten viskos wird und
- man die Partikel in den Räumen zwischen den Platten gewinnt.

## Claims

1. Device for removing particles from a stream of fluid, comprising a housing (10) having a passage (16) for the stream of fluid in turbulent flow, and a plurality of objects oriented transversely in relation to the direction of flow, said objects in the form of plates (18) having edges communicating with the stream of fluid and defining between them at least one stagnant space in which the particles are recovered, **characterised in that** the objects are plates provided with slots which extend to the inside from said edges.

2. Device according to claim 1, **characterised in that** said plates are charged with static electricity.

3. Device according to claim 1, in which said passage (16) is inclined in order to facilitate the removal of the particles collected in said spaces through gravity.

4. Device according to claim 1, comprising means designed to shake and/or displace the surfaces on which the particles are collected in order to facilitate their removal.

5. Device according to claim 1, **characterised in that** said passage is tubular.

6. Method for removing particles from a stream of fluid, **characterised in that**:
- said stream of fluid is passed through a passage such that the flow is turbulent,
- a plurality of plates is disposed oriented transversely in relation to the direction of flow, said plates being at least partly plates provided with slots which extend to the inside from the edges of the plates,
- said plates are spaced such that the flow between the plates is viscous,
- the particles are recovered in the spaces between the plates.
